# EUROPEAN PATENT SPECIFICATION

(11) **EP 2 804 353 B1**
(45) Date of publication and mention of the grant of the patent: **20.06.2018**
(21) Application number: 13749003.3
(22) Date of filing: 07.02.2013
(51) Int. Cl.: H04J 14/02, H04L 12/721

(54) **ROUTE FLOODING METHOD AND DEVICE AND PATH CALCULATION METHOD AND PATH CALCULATION UNIT**
ROUTENÜBERFLUTUNGSVERFAHREN UND VORRICHTUNG SOWIE WEGBERECHNUNGSVERFAHREN UND WEGBERECHNUNGSEINHEIT
PROCÉDÉ ET DISPOSITIF D'ACHEMINEMENT PAR INONDATION DE ROUTE ET PROCÉDÉ DE CALCUL DE CHEMIN ET UNITÉ DE CALCUL DE CHEMIN

(30) Priority: 13.02.2012 CN 201210031152
(43) Date of publication of application: 19.11.2014
(73) Proprietor: ZTE Corporation, Guangdong Province 518057 (CN)
(72) Inventor: WANG, Qilei, Shenzhen City Guangdong Province 518057 (CN)
(74) Representative: Murgitroyd & Company
(86) International application number: PCT/CN2013/071511
(87) International publication number: WO 2013/120437

(56) References cited:
- WO-A1-2009/056072
- CN-A- 1 394 081
- CN-A- 101 605 276
- CN-A- 101 820 556
- CN-A- 102 143 059
- US-A1- 2009 238 571
- US-A1- 2011 081 147
- US-A1- 2011 081 148
- FATAI ZHANG XIAOBING ZI HUAWEI RAMON CASELLAS CTTC O GONZALEZ DE DIOS TELEFONICA D CECCARELLI ERICSSON: "GMPLS OSPF-TE Extensions in support of Flexible-Grid in DWDM Networks; draft-zhang-ccamp-flexible-grid-ospf-ext-0 0.txt", GMPLS OSPF-TE EXTENSIONS IN SUPPORT OF FLEXIBLE-GRID IN DWDM NETWORKS; DRAFT-ZHANG-CCAMP-FLEXIBLE-GRID-OSPF-EXT-0 0.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERL, 24 October 2011 (2011-10-24), pages 1-12, XP015078827, [retrieved on 2011-10-24]
- G. Bernstein: "Routing and Wavelength Assignment Information Encoding for Wavelength Switched Optical Networks", , 31 October 2011 (2011-10-31), XP055195675, Retrieved from the Internet: URL:https://tools.ietf.org/pdf/draft-ietf- ccamp-rwa-wson-encode-13.pdf [retrieved on 2015-06-15]

## Description

### Technical Field

The present invention relates to the optical transport network field, and in particular, to a routing flooding method and apparatus, a path computation method and a path computation element in the optical transport network.

### Background of the Related Art

In the document of latest version of the ITU-T G.694.1 v1 version, a new flexible grid Dense Wavelength Partition Multiplexing (DWDM) technology is defined. There are very great differences between the flexible grid technology and the past fixed grid technology, and the main difference lies in that the current fixed grid technology uses the same bandwidth for the channels of any rates, and the bandwidth can be 50GHz, and also can be 25GHz, etc.; while for the flexible grid technology, different bandwidths can be used for the channel adopting the mixed rate for transmission, which can be 75GHz and also can be 100GHz. Now in the ITU-T organization, the traditional fixed grid technology is still used in the transmission channels of 10G, 40G, etc.; and the orientation of the flexible grid technology is mainly in the transmission channels beyond 100G, and the high rate in the transmission needs greater bandwidth, so it needs the bandwidth larger than the bandwidth of 50GHz that is used in the traditional fixed grid when the path is established.

The appearance of the flexible grid technology brings more chaos to the distribution of the bandwidth. More fragments may be produced and the frequency spectrum cannot be continually distributed and used if adopting the random distribution method in the process of usage, which causes the decline of the spectrum utilization. How to distribute the spectrum resources rationally under the flexible grid technology application scenario is a problem to be solved.

An example of prior art method is described in US 2011/081148, which discloses an apparatus comprising a network element configured to communicate at least one of signal constraints and processing capabilities for a plurality of resources blocks associated with a network node in a wavelength switched optical network node Type-Length-Value (TLV) and signal constraints and processing capabilities associated with a link in a WSON link TLV, wherein the WSON node TLV comprises comprises a node identifier (ID), one or more Generalized Multi-Protocol Label Switching (GMPLS) TLVs, a connectivity matrix TLV, and a resource pool TLV, and wherein the WSON link TLV comprises a link ID, one or more GMPLS TLVs, and a port wavelength restriction TLV, and relevant technology is also known from FATAI ZHANG XIAOBING ZI HUAWEI RAMON CASELLAS CTTC O GONZALEZ DE DIOS TELEFONICA D CECCARELLI ERICSSON: "GMPLS OSPF-TE Extensions in support of Flexible-Grid in DWDM Networks; draft-zhang-ccamp-flexible-grid-ospf-ext-00.tex".

### Content of the Invention

The embodiment of the present invention provides a distribution method according to claim 1, a distribution apparatus according to claim 5 and a path computation element according to claim 8, which provides a solution for calculating an end-to-end path traversing a flexible grid network and meeting a restriction condition. Further improvements and embodiments are provided in the dependent claims.Also provided is a routing flooding method, comprising: advertising partition information of a wavelength range or a spectrum block by using a routing protocol, wherein, the partition information indicates a bit rate and/or a modulation format matched with optical paths to which a continuous wavelength range or a spectrum block is applicable.

The above-mentioned method can further have the following characteristics:
adding the partition information in a sub-type/length/value (sub-TLV) of the routing protocol.

The above-mentioned method can further have the following characteristics:
the partition information comprises a bit rate field used for indicating the bit rate, a modulation ID field used for indicating the modulation format, the start label field of a continuous wavelength range or a spectrum block, and the end label field of a continuous wavelength range or a spectrum block;
or, the partition information comprises a bit rate field used for indicating the bit rate, the start label field of a continuous wavelength range or a spectrum block, and the end label field of a continuous wavelength range or a spectrum block;
or, the partition information comprises a modulation ID field used for indicating the modulation format, the start label field of a continuous wavelength range or a spectrum block, and the end label field of a continuous wavelength range or a spectrum block.

The above-mentioned method can further have the following characteristics:
the partition information comprises one or more modulation ID fields, and the modulation ID field comprises a modulation format validity identification bit and a modulation format; and the modulation format in the modulation ID field is an effective modulation format when the modulation format validity identification bit in the modulation ID field is indicated as effective.

The above-mentioned method can further have the following characteristics:
the partition information comprises interface addresses assigned for the continuous wavelength ranges or spectrum blocks, wherein, the interface addresses correspond to the bit rate and/or the modulation format matched with the optical path.

Also provided is a path computation method, comprising: a path computation element calculating an end-to-end path traversing a flexible grid network according to partition information of a wavelength range or a spectrum block advertised by a node device using a routing protocol, wherein, the partition information indicates a bit rate and/or a modulation format matched with optical paths to which a continuous wavelength range or a spectrum block is applicable.

Further provided is a routing flooding apparatus, comprising an information advertisement module, wherein,
the information advertisement module is configured to advertise partition information of a wavelength range or a spectrum block by using a routing protocol, wherein, the partition information indicates a bit rate and/or a modulation format matched with optical paths to which a continuous wavelength range or a spectrum block is applicable.

The above-mentioned routing flooding apparatus can further have the following characteristics:
the information advertisement module is configured to add the partition information in a sub-type/length/value (sub-TLV) of the routing protocol;
the partition information comprises a bit rate field used for indicating the bit rate, a modulation ID field used for indicating the modulation format, the start label field of the continuous wavelength ranges or spectrum blocks, and the end label field of the continuous wavelength ranges or spectrum blocks;
or, the partition information comprises a bit rate field used for indicating the bit rate, the start label field of the continuous wavelength ranges or spectrum blocks, and the end label field of the continuous wavelength ranges or spectrum blocks;
or, the partition information comprises a modulation ID field used for indicating the modulation format, the start label field of the continuous wavelength ranges or spectrum blocks, and the end label field of the continuous wavelength ranges or spectrum blocks.

The above-mentioned routing flooding apparatus can further have the following characteristics:
the partition information comprises interface addresses assigned for the continuous wavelength ranges or spectrum blocks, wherein, the interface addresses correspond to the bit rate and/or the modulation format matched with optical paths.

Yet further provided is a path computation element, configured to: calculate an end-to-end path traversing a flexible grid network according to partition information of a wavelength range or a spectrum block advertised by a node device, wherein, the partition information indicates a bit rate and/or a modulation format matched with optical paths to which a continuous wavelength range or a spectrum block are applicable.

An end-to-end path traversing a flexible grid network and meeting a restriction condition can be conveniently calculated through the embodiment of the present invention, thereby increasing the spectrum utilization.

### Brief Description of Drawings

FIG. 1 is a diagram of a routing flooding method;
FIG. 2 is a structure diagram of an extended sub-TLV;
FIG. 3 is a field structure diagram of a distribution mode one of partition information in embodiment one;
FIG. 4 is a field structure diagram of a distribution mode two of partition information in embodiment one;
FIG. 5 is a field structure diagram of a distribution mode three of partition information in embodiment one.

### Preferred Embodiments of the Present Invention

The wavelength assignment and the usage of the slot position of each node in the network which are already planned in advance at the beginning of establishing the path, which can improve the spectrum utilization effectively. So in order to improve the spectrum utilization of the node, it can be considered that the network management divides the spectrums during the initial planning period of the network; the spectrums are divided into a plurality of continuous wavelength ranges or spectrum blocks according to the requirement of the service; the width of each wavelength range or each spectrum block is defined by the administrative staff according to the policy; a continuous wavelength range or spectrum block is specially used for a certain signal with the same bit rate and modulation format to be used for establishing the path, that is, the spectrum blocks are divided according to the bit rate and the modulation format; for example: independently dividing a continuous spectrum range (m1, m2) in the spectrums specially used for the signal of which the bit rate is 400G bit/s and the modulation format is QPSK to establish the path. Similarly, the spectrum blocks can also be divided only according to the bit rate / modulation format. The above-mentioned network planning can be realized through the configuration of the network management. It can bring more advantages by adopting the above-mentioned spectrum planning mode; for example: the advantages, such as, it can effectively avoid the production of the Cross-phase modulation (abbreviated as XPM); it can improve the spectrum utilization; it is easy for the network management, etc.

When the control plane calculates an end-to-end path traversing a flexible grid network through the path computation element, it needs to take the spectral available information, spectral restriction information, etc. as the restriction condition of the path computation and consider it into the path computation to calculate one appropriate end-to-end path. Only after the spectral restriction information of each node device is advertised in the network through the routing protocol, the path computation element can only calculate an appropriate path according to the spectral restriction information.

The scheme of the present embodiment extends the routing advertisement mode of flexible grid spectral information, which advertises the partition information of the wavelength range or the spectrum block in the routing domain, and the partition principle of the wavelength range or the spectrum block is divided according to the bit rate and/or the modulation format. One section of continuous spectrum blocks is specially used for establishing the optical path with the same bit rate and the modulation format; according to the policy of network planning, the scheme of the present embodiment is also suitable for supporting the scheme which divides the spectrum blocks only according to the bit rate / the modulation format.

The scheme of the present embodiment describes one scheme of advertising the spectrum block by the routing flooding generally. The scheme described in the embodiment is only described as an example and does not represent the only solution.

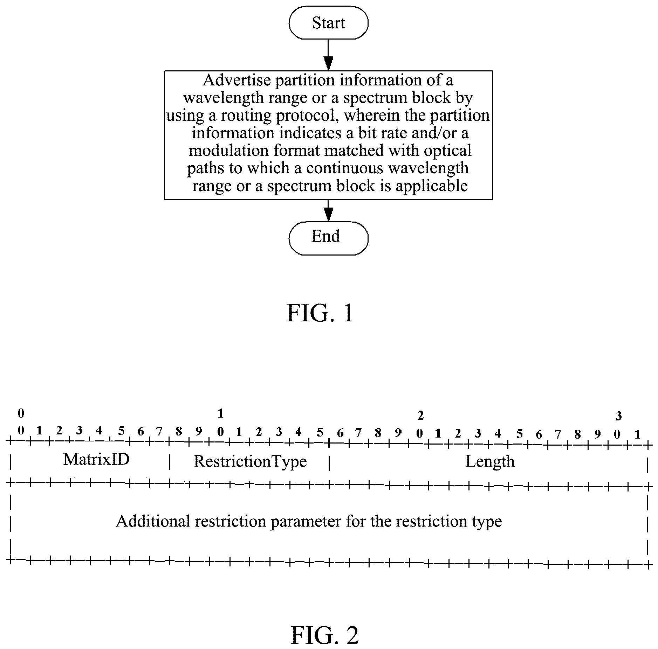

As shown in FIG. 1, the routing flooding method includes: advertising partition information of a wavelength range or a spectrum block by using a routing protocol, wherein, the partition information indicates a bit rate and/or a modulation format matched with optical paths to which a continuous wavelength range or a spectrum block is applicable.

### Embodiment one

There is the following description about the port label restriction in the IETF document [draft-ietf-ccamp-gmpls-general-constraints-ospf-te]: the port label restrictions describe the restriction that the network element / node and the link act on a certain port. These restriction information states what labels can be used in a certain link and what labels cannot be used, which is one relatively static information, and mainly related to the initial configuration of the network management. For example: the port label restrictions describe the restriction information applied by the link and various optical components (such as OXC, ROADM), etc.

According to the description in the above-mentioned document, the partition information of the spectrum block configured through the network management can be carried in the port label restrictions sub-type/length/value (abbreviated as sub-TLV) and advertised in the routing domain through the OSPF-TE routing protocol. The bit rate, the modulation format, and the information of the spectrum block associated with the bit rate and the modulation format will be carried in the extended port label restrictions sub-TLV, in order to express that the spectrum block is used specially for the path with the bit rate and the modulation format carried in the sub-TLV to establish the path.

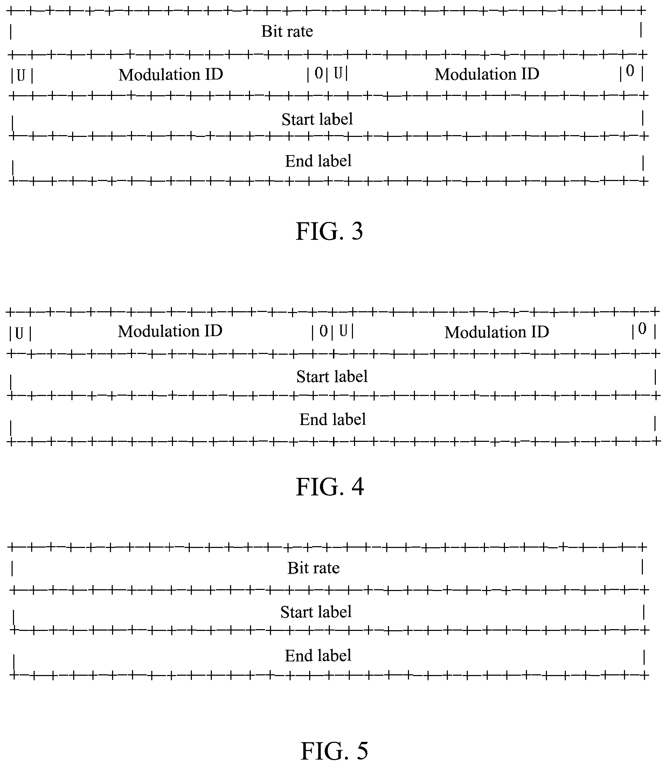

The extended sub-TLV expresses the bit rate and/or the modulation format and the association information assigned for a certain section of the spectrum blocks with same bit rate and the modulation format. As shown in FIG. 2, the implication of the Matrix ID and the RestrictionType included in the extended sub-TLV is same with the definition in the IETF document, and the Length field is used for expressing the length of the extended sub-TLV. The values of the assigned three new restriction types (RestrictionType) in the scheme of the present embodiment is used for expressing that the extended new types are corresponding to different distribution modes of the partition information, and the extended port label restrictions sub-TLV further includes the additional restriction parameter for the restriction type. FIG. 3, FIG. 4 and FIG. 5 are corresponding to the structure of the additional restriction parameter corresponding to the three new restriction types respectively.

As shown in FIG. 3, in mode one, the partition information includes a bit rate field used for indicating the bit rate, a modulation ID field used for indicating the modulation format, the start label field of a continuous wavelength range or a spectrum blocks, and the end label field of a continuous wavelength range or a spectrum block.

The bit rate field is used for describing the bit rate / bandwidth supported by the section of spectrums, expressed by the IEEE 32-bit floating number.

The partition information can include one or more modulation ID fields, and the modulation ID field comprises a modulation format validity identification bit (U) and modulation format information; and the modulation format in the modulation ID field is an effective modulation format when the modulation format validity identification bit in the modulation ID field is indicated as effective. For example, U =1 is used for expressing that the following 14 bits represent one effective modulation format, and the last bit of every 2 bytes is filled with 0 all the time; U =0 represents that the following 15 bits are the reserved bits, and do not carry any information. The modulation format information indicates the modulation format and the relevant parameters of the corresponding modulation format, and the modulation format can adopt various modulation formats used for the optical transport network, such as, the QPSK, 16QAM, etc.

The start label field and the end label field of a continuous wavelength range or spectrum block indicate a section of a continuous wavelength range or spectrum block, and then it can express that the section of continuous spectrum is specially used to support the establishment and usage of optical paths having the bit rate and the modulation format by combining the bit rate field and the modulation ID field.

In the scheme of the present embodiment, the port label restrictions sub-TLV advertised by the routing protocol can include a plurality of combination fields, as shown in FIG. 3, used for describing the partition information of the port spectrum block.

As shown in FIG. 4, in mode two, the partition information includes a bit rate field used for indicating the bit rate, the start label field of a continuous wavelength range or spectrum block, and the end label field of a continuous wavelength range or spectrum block.

Since some modulation format information includes the information of the bit rate, in some situations, in order to simplify, it may not carry the bit rate field and only carry the two fields, the modulation ID and the spectrum range, in the sub-TLV to express the association relation. The implication of the Modulation ID and the (start label, end label) in the extended sub-TLV is same as that in mode one.

In the scheme of the present embodiment, the port label restrictions sub-TLV advertised by the routing protocol can include a plurality of combination fields, as shown in FIG. 4, used for the describing the partition information of the port spectrum block.

As shown in FIG. 5, in mode three, the partition information includes a modulation ID field used for indicating the modulation format, the start label field of a continuous wavelength range or a spectrum block, and the end label field of a continuous wavelength range or a spectrum block.

In the practical network planning, it may not consider the modulation format information, because probably there will be many kinds of modulation formats available for usage under the same bit rate; if a single block of continuous spectrum ranges is divided for every kind of modulation format one by one, it may bring more restriction conditions when calculating the path, which is unfavorable for the high-efficient usage of the spectrum. So, in the practical network planning, it may divide the spectrum only according to the bit rate, that is, assigning a section of continuous spectrum blocks, and the section of spectrum blocks is only used for the establishment request for establishing the path with the same bit rate. The implication of the Bit rate and the (start label, end label) in the sub-TLV is same as that in mode one.

In the scheme of the present embodiment, the port label restrictions sub-TLV advertised by the routing protocol can include a plurality of combination fields, as shown in FIG. 5, used for the describing the partition information of the port spectrum block.

In the scheme of the present embodiment, the start label field and the end label field of the wavelength range or the spectrum block adopt the label in the [RFC6205] for identification, or adopt the label in the [draft-farrkingel-ccamp-flexigrid-lambda-label] document for identification.

### Embodiment two

The partition information includes interface addresses assigned for the continuous wavelength ranges or spectrum blocks, wherein, the interface addresses correspond to the bit rate and/or the modulation format matched with the optical path.

In the present embodiment, for the block divided for every spectrum, it can assign a single interface address. For example, it is set that the interface address 1 is corresponding to the bit rate of 400Gbit/s and the modulation format of QPSK, and the interface address 2 is corresponding to the bit rate of 400Gbit/s and the modulation format of 16-QAM.

Supposing the spectrum block partition is already done in a certain interface link of the node, the partition situation is as follows: the spectrum block (m1, m2) is specially used for the signal of which the bit rate is 400G bit/s and the modulation format is QPSK to establish the path; the (m3, m4) is specially used for the signal of which the bit rate is 400G bit/s and the modulation format is 16-QAM to establish the path; there is no superposition between the (m1, m2) and the (m3, m4), and at this time a single interface address 1 can be assigned to the spectrum block of the interface (m1, m2), and a single interface address 2 is assigned to the spectrum block of the interface (m3, m4). Since a single interface address is assigned for each spectrum range, the link represented by each spectrum range can be regarded as a single interface.

If there are less blocks of the spectrum partition, it will be more concise by adopting the scheme in embodiment one than the one in embodiment two.

In the routing flooding device corresponding to the above-mentioned method, the information advertisement module finishes the execution of the above-mentioned method, and it will no longer go into details here.

The path computation method based on the above-mentioned method includes that: a node device advertises the partition information of the wavelength range or the spectrum block by using the routing protocol, wherein the partition information indicates the bit rate and/or the modulation format matched with the optical path to which continuous wavelength ranges or spectrum blocks are applicable; the path computation element calculates the end-to-end path traversing the flexible grid network according to the partition information of the wavelength range or the spectrum block advertised by the node device.

For example: when the path computation element is calculating an end-to-end path of which the bandwidth is 400G, it will do the path computation according to the information advertised by the routing described in the scheme of the present embodiment; it selects a section of continuous and available spectrums which supports the end-to-end path of which the bit rate is 400G at first, and then it selects an appropriate end-to-end path according to the modulation format information supported by the spectrum in the routing advertisement. Thus, it realizes the calculation of the end-to-end path which traverses the flexible grid network and accords with the restriction condition.

The routing advertisement and extending scheme described in the embodiment of the present invention is extended based on the relevant document of the IETF WSON (wavelength switched optical network), and is the extension based on the OSPF-TE routing protocol.

It should be illustrated that, in the case of not conflicting, the embodiments in the present application and features in these embodiments can be combined with each other at random.

Obviously, the present invention can have a variety of other embodiments. Those skilled in the art can make the corresponding modifications and variations according to the present invention without departing from the spirit and essence of the present invention. And all of these modifications or the variations should be embodied in the protection scope of the appended claims of the present invention.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

### Industrial Applicability

An end-to-end path traversing a flexible grid network and meeting a restriction condition can be conveniently calculated through the embodiment of the present invention, thereby increasing the spectrum utilization.

## Claims

1. A distribution method of spectrum resources for an optical transport network, **characterized by** comprising:
advertising partition information about wavelength ranges or spectrum blocks by adding the partition information in a sub-type/length/value, sub-TLV, of a routing protocol , wherein the partition information indicates a bit rate and/or a modulation format matching optical paths to which a partitioned continuous wavelength range or a spectrum block is applicable;
wherein, the partition information comprises interface addresses assigned for the continuous wavelength ranges or spectrum blocks, wherein the interface addresses correspond to the bit rate matching the optical paths, or correspond to the modulation format matching with the optical paths, or correspond to the bit rate and the modulation format that match with the optical paths.

2. The method according to claim 1, wherein, the partition information comprises a bit rate field used for indicating the bit rate, a modulation ID field used for indicating the modulation format, a start label field of a continuous wavelength range or a spectrum block, and an end label field of a continuous wavelength range or a spectrum block;
or, the partition information comprises a bit rate field used for indicating the bit rate, a start label field of a continuous wavelength range or a spectrum block, and an end label field of a continuous wavelength range or a spectrum block;
or, the partition information comprises a modulation ID field used for indicating the modulation format, a start label field of a continuous wavelength range or spectrum blocks, and an end label field of a continuous wavelength range or spectrum block.

3. The method according to claim 2, wherein,
the partition information comprises one or more said modulation ID fields, and the modulation ID field comprises a modulation format validity identification bit and a modulation format, when the modulation format validity identification bit is valid, the modulation format is indicated as effective.

4. The method according to claim 1, comprising:
calculating by a path computation element an end-to-end path traversing a flexible grid network according to partition information of a wavelength range or a spectrum block advertised.

5. A distribution apparatus of spectrum resources for an optical transport network, **characterized by** comprising an information advertisement module, wherein,
the information advertisement module is configured to advertise partition information about wavelength ranges or spectrum blocks by adding the partition information in a sub-type/length/value, sub-TLV, of a routing protocol, wherein the partition information indicates a bit rate and/or a modulation format matching optical paths to which a partitioned continuous wavelength range or a spectrum block is applicable,
wherein, the partition information comprises interface addresses assigned for the continuous wavelength ranges or spectrum blocks, wherein the interface addresses correspond to the bit rate matching the optical paths, or correspond to the modulation format matching the optical paths, or correspond to the bit rate and the modulation format that match the optical paths.

6. The apparatus according to claim 5, wherein, the partition information comprises a bit rate field used for indicating the bit rate, a modulation ID field used for indicating the modulation format, a start label field of a continuous wavelength range or a spectrum block, and an end label field of a continuous wavelength range or a spectrum block;
or, the partition information comprises a bit rate field used for indicating the bit rate, a start label field of a continuous wavelength range or a spectrum block, and an end label field of a continuous wavelength range or a spectrum block;
or, the partition information comprises a modulation ID field used for indicating the modulation format, a start label field of a continuous wavelength range or spectrum block, and an end label field of a continuous wavelength range or a spectrum block.

7. The apparatus according to claim 6, wherein,
the partition information comprises one or more said modulation ID fields, and the modulation ID field comprises a modulation format validity identification bit and a modulation format, when the modulation format validity identification bit is valid, the modulation format is indicated as effective.

8. A path computation element, **characterized by** configured to:
calculate an end-to-end path traversing a flexible grid network according to partition information about wavelength ranges or spectrum blocks advertised by a node device by adding the partition information in a sub-type/length/value, sub-TLV, of a routing protocol, wherein the partition information indicates a bit rate and/or a modulation format matching optical paths to which a partitioned continuous wavelength range or a spectrum block is applicable;
wherein, the partition information comprises interface addresses assigned for the continuous wavelength ranges or spectrum blocks, wherein the interface addresses correspond to the bit rate matching the optical paths, or correspond to the modulation format matching the optical paths, or correspond to the bit rate and the modulation format that match the optical paths.

9. The path computation element according to claim 8, wherein the partition information comprises a bit rate field used for indicating the bit rate, a modulation ID field used for indicating the modulation format, a start label field of a continuous wavelength range or a spectrum block, and an end label field of a continuous wavelength range or a spectrum block;
or, the partition information comprises a bit rate field used for indicating the bit rate, a start label field of a continuous wavelength range or a spectrum block, and an end label field of a continuous wavelength range or a spectrum block;
or, the partition information comprises a modulation ID field used for indicating the modulation format, a start label field of a continuous wavelength range or spectrum block, and an end label field of a continuous wavelength range or spectrum block.

10. The path computation element according to claim 9, wherein,
the partition information comprises one or more said modulation ID fields, and the modulation ID field comprises a modulation format validity identification bit and a modulation format, when the modulation format validity identification bit is valid, the modulation format is indicated as effective.

## Patentansprüche

1. Ein Verteilungsverfahren für Spektrumsressourcen für ein optisches Transportnetz, **dadurch gekennzeichnet, dass** es Folgendes beinhaltet:
Bekanntgeben von Partitionsinformationen über Wellenlängenbereiche oder Spektrumsblöcke durch Hinzufügen der Partitionsinformationen in ein Subtyp/Länge/Wert (sub-type/length/value), Sub-TLV, eines Routing-Protokolls, wobei die Partitionsinformationen eine Bitrate und/oder ein Modulationsformat angeben, die mit optischen Wegen übereinstimmen, für die ein partitionierter, kontinuierlicher Wellenlängenbereich oder ein Spektrumsblock anwendbar ist;
wobei die Partitionsinformationen Schnittstellenadressen beinhalten, die den kontinuierlichen Wellenlängenbereichen oder Spektrumsblöcken zugeordnet sind, wobei die Schnittstellenadressen der Bitrate entsprechen, die mit den optischen Wegen übereinstimmt, oder dem Modulationsformat entsprechen, das mit den optischen Wegen übereinstimmt, oder der Bitrate und dem Modulationsformat entsprechen, die mit den optischen Wegen übereinstimmen.

2. Verfahren gemäß Anspruch 1, wobei die Partitionsinformationen ein Bitratenfeld, das zum Angeben der Bitrate verwendet wird, ein Modulations-ID-Feld, das zum Angeben des Modulationsformats verwendet wird, ein Startmarkenfeld für einen kontinuierlichen Wellenlängenbereich oder einen Spektrumsblock und ein Endmarkenfeld für einen kontinuierlichen Wellenlängenbereich oder einen Spektrumsblock beinhalten;
oder die Partitionsinformationen ein Bitratenfeld, das zum Angeben der Bitrate verwendet wird, ein Startmarkenfeld für einen kontinuierlichen Wellenlängenbereich oder einen Spektrumsblock und ein Endmarkenfeld für einen kontinuierlichen Wellenlängenbereich oder einen Spektrumsblock beinhalten;
oder die Partitionsinformationen ein Modulations-ID-Feld, das zum Angeben des Modulationsformats verwendet wird, ein Startmarkenfeld für einen kontinuierlichen Wellenlängenbereich oder Spektrumsblöcke und ein Endmarkenfeld für einen kontinuierlichen Wellenlängenbereich oder Spektrumsblock beinhalten.

3. Verfahren gemäß Anspruch 2, wobei
die Partitionsinformationen ein oder mehrere der Modulations-ID-Felder beinhalten und das Modulations-ID-Feld ein Modulationsformat-Gültigkeitskennbit und ein Modulationsformat beinhaltet, wobei, wenn das Modulationsformat-Gültigkeitskennbit gültig ist, das Modulationsformat als wirksam angegeben wird.

4. Verfahren gemäß Anspruch 1, das Folgendes beinhaltet:
Berechnen, durch ein Wegrechnungselement, eines Ende-zu-Ende-Weges, der durch ein flexibles Grid-Netz verläuft, gemäß bekanntgegebenen Partitionsinformationen über einen Wellenlängenbereich oder einen Spektrumsblock.

5. Eine Verteilungsausrüstung für Spektrumsressourcen für ein optisches Transportnetz, **dadurch gekennzeichnet, dass** sie ein Informationsbekanntgabemodul beinhaltet, wobei das Informationsbekanntgabemodul konfiguriert ist, Partitionsinformationen über Wellenlängenbereiche oder Spektrumsblöcke durch Hinzufügen der Partitionsinformationen in ein Subtyp/Länge/Wert, Sub-TLV, eines Routing-Protokolls bekanntzugeben, wobei die Partitionsinformationen eine Bitrate und/oder ein Modulationsformat angeben, die mit optischen Wegen übereinstimmen, für die ein partitionierter, kontinuierlicher Wellenlängenbereich oder ein Spektrumsblock anwendbar ist;
wobei die Partitionsinformationen Schnittstellenadressen beinhalten, die den kontinuierlichen Wellenlängenbereichen oder Spektrumsblöcken zugeordnet sind, wobei die Schnittstellenadressen der Bitrate entsprechen, die mit den optischen Wegen übereinstimmt, oder dem Modulationsformat entsprechen, das mit den optischen Wegen übereinstimmt, oder der Bitrate und dem Modulationsformat entsprechen, die mit den optischen Wegen übereinstimmen.

6. Ausrüstung gemäß Anspruch 5, wobei die Partitionsinformationen ein Bitratenfeld, das zum Angeben der Bitrate verwendet wird, ein Modulations-ID-Feld, das zum Angeben des Modulationsformats verwendet wird, ein Startmarkenfeld für einen kontinuierlichen Wellenlängenbereich oder einen Spektrumsblock und ein Endmarkenfeld für einen kontinuierlichen Wellenlängenbereich oder einen Spektrumsblock beinhalten;
oder die Partitionsinformationen ein Bitratenfeld, das zum Angeben der Bitrate verwendet wird, ein Startmarkenfeld für einen kontinuierlichen Wellenlängenbereich oder einen Spektrumsblock und ein Endmarkenfeld für einen kontinuierlichen Wellenlängenbereich oder einen Spektrumsblock beinhalten;
oder die Partitionsinformationen ein Modulations-ID-Feld, das zum Angeben des Modulationsformats verwendet wird, ein Startmarkenfeld für einen kontinuierlichen Wellenlängenbereich oder Spektrumsblock und ein Endmarkenfeld für einen kontinuierlichen Wellenlängenbereich oder einen Spektrumsblock beinhalten.

7. Ausrüstung gemäß Anspruch 6, wobei
die Partitionsinformationen ein oder mehrere der Modulations-ID-Felder beinhalten und das Modulations-ID-Feld ein Modulationsformat-Gültigkeitskennbit und ein Modulationsformat beinhaltet, wobei, wenn das Modulationsformat-Gültigkeitskennbit gültig ist, das Modulationsformat als effektiv angegeben wird.

8. Ein Wegrechnungselement, **dadurch gekennzeichnet, dass** es für Folgendes konfiguriert ist:
Berechnen eines Ende-zu-Ende-Weges, der durch ein flexibles Grid-Netz verläuft, gemäß Partitionsinformationen über Wellenlängenbereiche oder Spektrumsblöcke, die von einer Knotenvorrichtung durch Hinzufügen der Partitionsinformationen in ein Subtyp/Länge/Wert, Sub-TLV, eines Routing-Protokolls bekanntgegeben werden, wobei die Partitionsinformationen eine Bitrate und/oder ein Modulationsformat angeben, die mit optischen Wegen übereinstimmen, für die ein partitionierter, kontinuierlicher Wellenlängenbereich oder ein Spektrumsblock anwendbar ist;
wobei die Partitionsinformationen Schnittstellenadressen beinhalten, die den kontinuierlichen Wellenlängenbereichen oder Spektrumsblöcken zugeordnet sind, wobei die Schnittstellenadressen der Bitrate entsprechen, die mit den optischen Wegen übereinstimmt, oder dem Modulationsformat entsprechen, das mit den optischen Wegen übereinstimmt, oder der Bitrate und dem Modulationsformat entsprechen, die mit den optischen Wegen übereinstimmen.

9. Wegrechnungselement gemäß Anspruch 8, wobei die Partitionsinformationen ein Bitratenfeld, das zum Angeben der Bitrate verwendet wird, ein Modulations-ID-Feld, das zum Angeben des Modulationsformats verwendet wird, ein Startmarkenfeld für einen kontinuierlichen Wellenlängenbereich oder einen Spektrumsblock und ein Endmarkenfeld für einen kontinuierlichen Wellenlängenbereich oder einen Spektrumsblock beinhalten;
oder die Partitionsinformationen ein Bitratenfeld, das zum Angeben der Bitrate verwendet wird, ein Startmarkenfeld für einen kontinuierlichen Wellenlängenbereich oder einen Spektrumsblock und ein Endmarkenfeld für einen kontinuierlichen Wellenlängenbereich oder einen Spektrumsblock beinhalten;
oder die Partitionsinformationen ein Modulations-ID-Feld, das zum Angeben des Modulationsformats verwendet wird, ein Startmarkenfeld für einen kontinuierlichen Wellenlängenbereich oder Spektrumsblock und ein Endmarkenfeld für einen kontinuierlichen Wellenlängenbereich oder Spektrumsblock beinhalten.

10. Wegrechnungselement gemäß Anspruch 9, wobei
die Partitionsinformationen ein oder mehrere der Modulations-ID-Felder beinhalten und das Modulations-ID-Feld ein Modulationsformat-Gültigkeitskennbit und ein Modulationsformat beinhaltet, wobei, wenn das Modulationsformat-Gültigkeitskennbit gültig ist, das Modulationsformat als effektiv angegeben wird.

## Revendications

1. Une méthode de distribution de ressources de spectre pour un réseau de transport optique, **caractérisée par** le fait de comprendre :
l'annonce d'informations de partition concernant des gammes de longueurs d'onde ou des blocs de spectre en ajoutant les informations de partition dans un sous-type/longueur/valeur, sous-TLV, d'un protocole de routage, les informations de partition indiquant un débit binaire et/ou un format de modulation assorti à des chemins optiques auxquels une gamme de longueur d'onde continue partitionnée ou un bloc de spectre est applicable ;
dans laquelle les informations de partition comprennent des adresses d'interface assignées aux gammes de longueurs d'onde continues ou aux blocs de spectre, les adresses d'interface correspondant au débit binaire assorti aux chemins optiques, ou correspondant au format de modulation assorti aux chemins optiques, ou correspondant au débit binaire et au format de modulation qui sont assortis aux chemins optiques.

2. La méthode selon la revendication 1, dans laquelle les informations de partition comprennent un champ de débit binaire utilisé pour indiquer le débit binaire, un champ d'ID de modulation utilisé pour indiquer le format de modulation, un champ d'étiquette de début d'une gamme de longueur d'onde continue ou d'un bloc de spectre, et un champ d'étiquette de fin d'une gamme de longueur d'onde continue ou d'un bloc de spectre ;
ou les informations de partition comprennent un champ de débit binaire utilisé pour indiquer le débit binaire, un champ d'étiquette de début d'une gamme de longueur d'onde continue ou d'un bloc de spectre, et un champ d'étiquette de fin d'une gamme de longueur d'onde continue ou d'un bloc de spectre ;
ou les informations de partition comprennent un champ d'ID de modulation utilisé pour indiquer le format de modulation, un champ d'étiquette de début d'une gamme de longueur d'onde continue ou de blocs de spectre, et un champ d'étiquette de fin d'une gamme de longueur d'onde continue ou d'un bloc de spectre.

3. La méthode selon la revendication 2, dans laquelle
les informations de partition comprennent un ou plusieurs desdits champs d'ID de modulation, et le champ d'ID de modulation comprend un bit d'identification de validité de format de modulation et un format de modulation, lorsque le bit d'identification de validité de format de modulation est valide, le format de modulation est indiqué comme efficace.

4. La méthode selon la revendication 1, comprenant :
le calcul, par un élément de calcul de chemin, d'un chemin de bout en bout traversant un réseau de grille souple selon des informations de partition d'une gamme de longueur d'onde ou d'un bloc de spectre annoncé.

5. Un appareil de distribution de ressources de spectre pour un réseau de transport optique, **caractérisé par** le fait de comprendre un module d'annonce d'informations, dans lequel
le module d'annonce d'informations est configuré pour annoncer des informations de partition concernant des gammes de longueurs d'onde ou des blocs de spectre en ajoutant les informations de partition dans un sous-type/longueur/valeur, sous-TLV, d'un protocole de routage, les informations de partition indiquant un débit binaire et/ou un format de modulation assorti à des chemins optiques auxquels une gamme de longueur d'onde continue partitionnée ou un bloc de spectre est applicable,
dans lequel les informations de partition comprennent des adresses d'interface assignées aux gammes de longueurs d'onde continues ou aux blocs de spectre, les adresses d'interface correspondant au débit binaire assorti aux chemins optiques, ou correspondant au format de modulation assorti aux chemins optiques, ou correspondant au débit binaire et au format de modulation qui sont assortis aux chemins optiques.

6. L'appareil selon la revendication 5, dans lequel les informations de partition comprennent un champ de débit binaire utilisé pour indiquer le débit binaire, un champ d'ID de modulation utilisé pour indiquer le format de modulation, un champ d'étiquette de début d'une gamme de longueur d'onde continue ou d'un bloc de spectre, et un champ d'étiquette de fin d'une gamme de longueur d'onde continue ou d'un bloc de spectre ;
ou les informations de partition comprennent un champ de débit binaire utilisé pour indiquer le débit binaire, un champ d'étiquette de début d'une gamme de longueur d'onde continue ou d'un bloc de spectre, et un champ d'étiquette de fin d'une gamme de longueur d'onde continue ou d'un bloc de spectre ;
ou les informations de partition comprennent un champ d'ID de modulation utilisé pour indiquer le format de modulation, un champ d'étiquette de début d'une gamme de longueur d'onde continue ou d'un bloc de spectre, et un champ d'étiquette de fin d'une gamme de longueur d'onde continue ou d'un bloc de spectre.

7. L'appareil selon la revendication 6, dans lequel
les informations de partition comprennent un ou plusieurs desdits champs d'ID de modulation, et le champ d'ID de modulation comprend un bit d'identification de validité de format de modulation et un format de modulation, lorsque le bit d'identification de validité de format de modulation est valide, le format de modulation est indiqué comme efficace.

8. Un élément de calcul de chemin, **caractérisé par** le fait d'être configuré pour :
calculer un chemin de bout en bout traversant un réseau de grille souple selon des informations de partition concernant des gammes de longueurs d'onde ou des blocs de spectre annoncés par un dispositif de noeud en ajoutant les informations de partition dans un sous-type/longueur/valeur, sous-TLV, d'un protocole de routage, les informations de partition indiquant un débit binaire et/ou un format de modulation assorti à des chemins optiques auxquels une gamme de longueur d'onde continue partitionnée ou un bloc de spectre est applicable ;
dans lequel les informations de partition comprennent des adresses d'interface assignées aux gammes de longueurs d'onde continues ou aux blocs de spectre, les adresses d'interface correspondant au débit binaire assorti aux chemins optiques, ou correspondant au format de modulation assorti aux chemins optiques, ou correspondant au débit binaire et au format de modulation qui sont assortis aux chemins optiques.

9. L'élément de calcul de chemin selon la revendication 8, dans lequel les informations de partition comprennent un champ de débit binaire utilisé pour indiquer le débit binaire, un champ d'ID de modulation utilisé pour indiquer le format de modulation, un champ d'étiquette de début d'une gamme de longueur d'onde continue ou d'un bloc de spectre, et un champ d'étiquette de fin d'une gamme de longueur d'onde continue ou d'un bloc de spectre ;
ou les informations de partition comprennent un champ de débit binaire utilisé pour indiquer le débit binaire, un champ d'étiquette de début d'une gamme de longueur d'onde continue ou d'un bloc de spectre, et un champ d'étiquette de fin d'une gamme de longueur d'onde continue ou d'un bloc de spectre ;
ou les informations de partition comprennent un champ d'ID de modulation utilisé pour indiquer le format de modulation, un champ d'étiquette de début d'une gamme de longueur d'onde continue ou d'un bloc de spectre, et un champ d'étiquette de fin d'une gamme de longueur d'onde continue ou d'un bloc de spectre.

10. L'élément de calcul de chemin selon la revendication 9, dans lequel
les informations de partition comprennent un ou plusieurs desdits champs d'ID de modulation, et le champ d'ID de modulation comprend un bit d'identification de validité de format de modulation et un format de modulation, lorsque le bit d'identification de validité de format de modulation est valide, le format de modulation est indiqué comme efficace.
